# EUROPEAN PATENT SPECIFICATION

(11) **EP 4 343 563 B1**
(45) Date of publication and mention of the grant of the patent: **18.12.2024**
(21) Application number: 23194653.4
(22) Date of filing: 31.08.2023
(51) Int. Cl.: G06F 13/38

(54) **NETWORK ARCHITECTURE, CORRESPONDING VEHICLE AND METHOD**
NETZWERKARCHITEKTUR, ENTSPRECHENDES FAHRZEUG UND VERFAHREN
ARCHITECTURE DE RÉSEAU, VÉHICULE ET PROCÉDÉ CORRESPONDANTS

(30) Priority: 20.09.2022 IT 202200019233
(43) Date of publication of application: 27.03.2024
(73) Proprietor: STMicroelectronics S.r.l., 20864 Agrate Brianza (MB) (IT)
(72) Inventor: BORGONOVO, Giampiero, I-20833 Giussano (Monza Brianza) (IT); RE FIORENTIN, Lorenzo, I-10141 Torino (IT)
(74) Representative: Buzzi, Notaro & Antonielli d'Oulx S.p.A.

(56) References cited:
- XILINX: "Zynq-7000All Programmable SoCTechnical Reference ManualUG585 (v1.10) February 23, 2015", INTERNET CITATION, 22 January 2016 (2016-01-22), pages 1 - 207, XP002792668, Retrieved from the Internet <URL:https://web.archive.org/web/20160122134144/https://www.xilinx.com/support/documentation/user_guides/ug585-Zynq-7000-TRM.pdf> [retrieved on 20190626]

## Description

### Technical field

The description relates to communication networks for use, in the automotive sector, for instance.

Examples as discussed herein facilitate providing a flexible, safe and scalable system architecture for an optimized Ethernet router (L2+)/switch(L2)/gateway for high-speed automotive networks.

### Description of the related art

The ever-increasing use of sophisticated electronics in the automotive sector has stimulated a continuous trend towards solutions that are:
optimized as regards area and power consumption (clock frequency),
optimized and safe in terms of performance and quality of service (QoS): factors such as latency and bandwidth for a specific automotive networking use case (central switch, domain gateway or hybrid use) are significant in that respect,
scalable in terms of number of communication ports, protocol type and bandwidth requirements: these are significant factors in facilitating achieving an adequate trade-off between cost and performance; and
advantageously re-usable for different use cases (devices, applications).

Document XILINX: "Zynq-7000All Programmable SoC Technical Reference ManualUG585 (v1.10)" of February 23, 2015 discloses a system on chip (SoC) composed of a Processing System (PS), an Application Processor Unit (APU), memory interfaces, I/O Peripherals (IOP), an Interconnect feature and Programmable Logic (PL). The Zynq 7000 architecture conveniently maps the custom logic and software in the PL and PS respectively. That system enables the realization of various differentiated system functions. The integration of the PS with the PL provides levels of performance that two-chip solutions (for example, an ASSP with an FPGA) cannot match due to their limited I/O bandwidth, loose-coupling and power budgets.

### Object and summary

An object of one or more embodiments is to contribute in providing further improvements in the context discussed in the foregoing.

According to the invention, such an object is achieved via network architecture (essentially, architecture of a communication system) having the features set forth in claim 1 that follows.

One or more embodiments relate to a corresponding vehicle as per claim 12. A motor vehicle equipped with an on-board communication network, wherein the network comprises the system of the invention to provide MAC/router/switch/gateway features for such an on-board communication network may be exemplary of such a vehicle.

The invention relates to a corresponding method as per claim 13.

Examples as discussed herein offer one or more of the following advantages:
specific functions (e.g., gateway functions) can be integrated even though these have not yet been consolidated in co-operation with car manufacturers;
increased flexibility is provided in configuring the IP sub-system according to system/marketing requirements for a specific use case/application/device;
plug-and-play solutions are provided that are compatible with existing microcontroller reference platforms;
only non-recurring engineering NRE costs are involved; and
an adequate trade-off can be achieved between area/power consumption and performance (latency, bandwidth).

Examples as discussed herein provide static configurability of critical parameters of IP cores along with open and flexible architecture (u-architecture) that facilitates functional extension of gateway capabilities.

### Brief description of the figures

One or more embodiments will now be described, by way of example only, with reference to the annexed figures, wherein:
Figure 1 is a functional diagram illustrative of conventional network architecture,
Figure 2 is a functional diagram illustrative of a network architecture applicable, for instance, to an automotive scenario,
Figure 3 is exemplary of another network architecture also applicable, for instance, to an automotive scenario, and
Figure 4 is a general block diagram of network architecture according to embodiments discussed herein.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

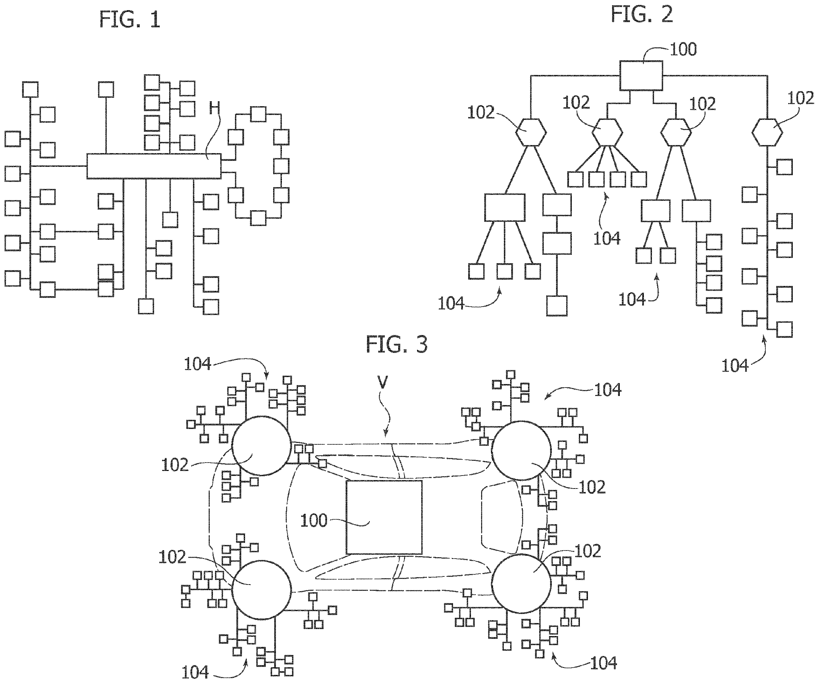

Hardware (HW) networking of different automotive communication protocols (Ethernet, LIN, CAN, FlexRay, ...) is gradually migrating from a heterogeneous architecture of modules arranged around a central "hub" (gateway/switch) H - as illustrated in Figure 1 - to a hierarchical topology based on different physical zones and functional domains - as illustrated in Figure 2.

The exemplary hierarchical topology illustrated in Figure 2 comprises:
a central gateway/switch 100: a high-speed backbone network can be based on a switched Ethernet network (central gateway) for inter-domain communication;
a set of domain gateways 102 that can "hide" subnetwork peculiarities to the Ethernet backbone (e.g., CAN2Ethernet, FlexRay2Ethernet, LIN2Ethernet, etc.); and
electronic devices 104 that are grouped into domains based on functionality (e.g., in the case of automotive applications: power train, chassis, advanced driver assistance system or ADAS, body & comfort).

Figure 3 is exemplary of the possibility of applying architecture as illustrated therein on board a vehicle V such as a motor car based on physical locations, thus having a "central brain" 100 and "zonal gateways" 102.

In networks for use, e.g., in the automotive sector, various protocol layers, designated L1 to L7, can be defined as follows:
Layer 1 or L1 protocol (physical): to transmit bits over a medium (e.g., Ethernet physical layer),
Layer 2 or L2 protocol (data link) : to organize information into frames and handle intra-network delivery,
Layer 3 or L3 protocol (network): to handle internetworking communication (host-to-host communication),
Layer 4 or L4 protocol (transport): to provide a reliable message communication (e.g., packet reordering, packet re-transmission) system between processes,
Layer 5 or L5 protocol (session) : to establish a communication between two hosts,
Layer 6 or L6 protocol (presentation): to compress and/or encrypt data; and
Layer 7 or L7 protocol (application): to allow access to network resources.

For instance:
an Ethernet switch operates at the L2 layer,
a router operates at the L3 layer, and
a gateway operates on different types of L2 protocols by encapsulation/decapsulation based on a defined hierarchy of protocols.

It is noted that:
certain providers of intellectual property or IP cores offer (Ethernet-based) solutions based on a conventional (Ethernet-only) L2 switch/L3 router previously developed for applications in the consumer market,
various types of automotive microcontrollers do not implement any hardware (HW) gateway/switch/router function;
certain emerging vendors of intellectual property or IP cores (specialized in automotive networking) are in the process of developing specific HW gateway/switch/router functions to address these issues.

The designation IP (intellectual property) core - or, briefly IP - is currently applied to a block of logic or data that can be used in producing a field programmable gate array (FPGA) or application-specific integrated circuit (ASIC) for a semiconductor device. IP cores are essentially re-usable and portable: a certain IP core is expected to be easily be inserted into any technology or design methodology. IP cores can be used, for instance, in Ethernet controllers, peripheral component interconnect PCI interfaces, universal asynchronous receiver/transmitter (UART) modules, or central processing units (CPUs), for instance.

As discussed in the introductory portion of the present description, in recent years, in-vehicle networking has gone through extensive development to keep up with requirements of next generation vehicles (e.g., new autonomous driving and entertainment systems).

These developments involve all aspects of in-vehicle networking technology, from the introduction of new physical layer technologies (e.g., Multi-Gigabit Automotive Ethernet) to the development of new network topologies, thus affecting the entire automotive industry supply chain from silicon vendors to OEMs.

Referring to the automotive scenario (this will be considered by way example throughout the present description, being otherwise understood that the embodiments are not restricted to use in the automotive scenario), emerging multimedia/safety applications converge on an Ethernet backbone in addition to conventional communication links (CAN, FlexRay, LIN). As a consequence, micro-controllers for body/chassis/power train applications can take advantage of the availability of networking accelerators based on the Ethernet protocol, including gateway functionalities, security and safety features that facilitate meeting specifications such as Automotive Safety Integrity Level (ASIL) "B" grade.

Existing network accelerators based on conventional devices (switches for consumer/industrial applications may be exemplary of these) can be hardly considered for integrating in a single device/IP core or block all the features specifically required in automotive (safety, gateway functionalities).

Conventional hardware (HW) network accelerators do not generally support a gateway functionality (LIN/CAN/FlexRay over Ethernet), switch/router (L2+) functionalities and ASIL-B safety grade.

Conversely, a purely software-based (SW-based) approach relying on software cores (e.g., using a multi-core platform) involves very high clock frequencies, and may not satisfy performance and Quality-of-Service (QoS) requirements as desirable for the related applications. This may be especially the case of high-end configurations with multiple media access control (MAC) Ethernet ports at high-speed rate (Gbit/s or higher).

More generally, conventional solutions suffer from various drawbacks.

For instance, certain solutions require adaptation (that is, optimization in terms of area and/or power consumption) for a specific use case/application/device.

Certain solutions require developing specific bridges, wrappers or interfaces in order to provide a plug-and-play solution for use in an existing microcontroller reference platform.

These solutions are hardly suitable for use in situations where gateway functionalities are still in the process of being ultimately defined, which may occur in the automotive sector.

Also, additional effort/costs may be involved in meeting with end-customer requests for adaptation of a certain IP solution.

The examples discussed herein present system architecture providing a flexible, safe, secure, and highly configurable network accelerator that is ready to address the requirements of next-generation automotive gateways.

System architecture as exemplified herein is applicable to a variety of networking applications (such as central switch, domain/zone switch/gateway devices, for instance) where hardware (HW) acceleration of networking tasks is beneficial in facilitating improved performance in terms of bandwidth allocation, minimum latency and quality of service of the incoming/outcoming data/audio/video streams.

Examples as discussed herein facilitate (in view of prospected use in next-generation automotive gateways, for instance) integrating a flexible and secure HW network accelerator that is capable of routing traffic with reduced central processing unit (CPU) intervention and at the same time capable of handling different in-vehicle networking technologies (e.g., CAN, Ethernet).

Micro architecture as discussed herein facilitates implementing a flexible multilayer (L2+), e.g., automotive Ethernet switch with high quality of service (QoS) functionalities complying with audio-video bridging (AVB) and time-sensitive networking (TSN) specifications.

In addition to the ability of supporting traffic between multiple media access control (MAC) physical ports (e.g., Ethernet, CAN, LIN) another feature of architecture as discussed herein is provided by the implementation of internal system-on-chip (SoC) virtual machine (VM) ports to route L2/L3 traffic generated and consumed by virtual machines (VMs) each running on a different SoC core.

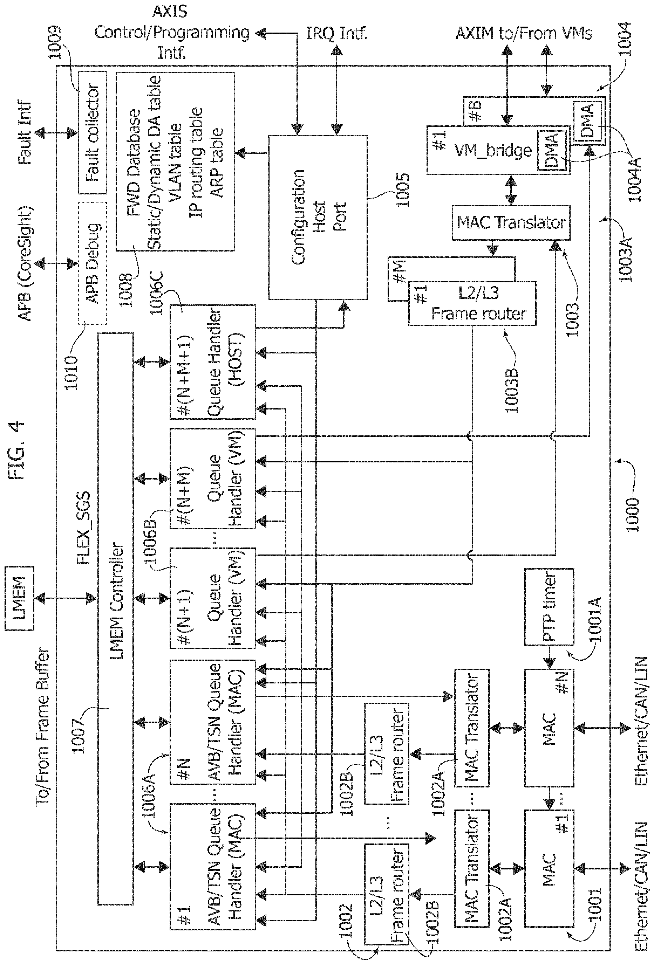

A more detailed description of system architecture as exemplified herein will now be provided in connection with Figure 4.

The acronyms appearing throughout this description are well known to those of skill in the art. The meaning of acronyms appearing in the following lists of features and the drawings is reproduced in Table I below for immediate reference.

**Table I - Acronyms used in the description/drawings**

| Term | Meaning |
|---|---|
| AVB | Audio Video Bridging (IEEE 802.1BA, IEEE 802.1AS, IEEE 802.1Qav, IEEE 802.1Qat) |
| AXIM | Advanced eXtensible Interface (AXI) master interface |
| AXIS | AXI slave interface |
| CRC | Cyclic Redundancy Check |
| CBS | Credit based shaper |
| DA | Destination Address |
| DB | Database |
| FUSA | Functional Safety |
| Host | External System |
| LMEM | Local memory |
| LMC | Local memory controller |
| SMEM | System memory |
| MAC | Media Access Control implementing the media access control sub-layer of the data link layer |
| PDU | Protocol data unit |
| PTP | Precision Time Protocol |
| SA | Source Address |
| SW | Software |
| TAS | Time aware shaper |
| TS | Timestamp |
| QoS | Quality of Service |
| QHND | Queue handler |
| VLAN | Virtual Local Area Network |
| VM | A software Virtual Machine running on an external core |
| VMID | Virtual machine identifier |
| VMB | Virtual machine bridge (AXIM <-> VMP) |
| VMP | Virtual machine port |
| WRR | Weighted round robin |

Throughout this description and the claims appended thereto, the designation "wrapper" will be used in its current meaning to designate a hardware module (software configurable) that "wraps" one or more other modules or features thus acting as an intermediary between its own clients (that use the wrapper interface) and the wrapped module(s) that implement the requested functions as a deputy of the wrapper object.

System architecture as exemplified in Figure 4 supports a number of main features/functions as detailed in the following.

HW network accelerator: packet forwarding at wire speed, non-blocking, high performance;
forwarding database: static MAC DA (multicast)/masks, static/dynamic (learning) MAC DA (unicast) Hash table, static VLAN ID Hash table, static IPv4/IPv6 addresses/masks routing table, ARP table;
L2 frame classification and forwarding based on MAC DA, VLAN ID;
L2+ frame classification and forwarding based on MAC DA, IPv4/IPv6 addresses, ARP table;
L2 flow from/to MAC ports, from VMP to MAC ports, from MAC to VMP ports (optional);
L2+ flow from/to VMP ports, from MAC to VMP ports;
input priority re-generation x MAC/VMP port;
reduced latency, and reliable throughput requirements by quality of service (QoS): threshold/cut-through mode in addition to the store & forward mode;
QoS based on 8x traffic classes with different schedulers/shapers;
scheduling algorithms: strict priority, weighted round robin (WRR);
bandwidth shapers: credit-based shaper (CBS), time aware shaper (TAS) per MAC destination port;
concurrent frame management via multiple/configurable queues mapped in LMEM x MAC/VMP destination port and traffic class;
SW (host) queue mapping in LMEM for local frames + broadcast and multicast frames + PTP, MKA, and so on;
local memory controller (buffer management, interleaving addressing schemes, multiple memory banks);
virtual machine bridge (VMB) including an embedded high-end AXIM DMA (multi-channels) for the L2/L3 data flow from/to VMP ports (VMs running on SoC); and
security: MACsec integrity check and MKA (key agreement protocol) protocols (hop2hop protection), configuration via HSM (secure port).

The following is a list of the main sub-blocks included in a networking accelerator 1000 as illustrated in Figure 4.

Reference number 1001 collectively designates a set of internal Ethernet/LIN/CAN/other MAC controllers (#1 to #N, with N=32, for instance). These controller (clocked by a precision time protocol timer 1001A) control data exchange over an Ethernet/LIN/CAN/other data link - not visible in the figures.

Reference number 1002 collectively designates Ethernet/LIN/CAN/other MAC "wrappers" (#1 to #N, with N=32, for instance) including MAC translator and (L2/L3) frame router features, designated 1002A and 1002B, respectively.

The MAC translator features 1002A act between the MAC controllers 1001 and the frame router features 1002B.

Reference number 1003 collectively designates virtual machine (VM) wrappers (#1 to #M) including MAC translator and frame router (L2/L3) features indicated 1003A and 1003B, respectively.

The MAC translator features 1003A act between the frame router features 1003B and a virtual machine (VM) bridge (e.g., AXIM translator) blocks collectively designated 1004 that include direct memory access (DMA) features to interface with SoC internal virtual machines (VMs - not visible in the figure) via an AXIM interface.

Architecture as illustrated in Figure 4 comprises a SW Ethernet port 1005 for a host. This port comprises an AXIS wrapper 1005 including a MAC translator feature and a L2/L3 frame router feature plus an AXIS bridge coupled with the wrapper 1005 for the configuration and management of the network by a host, via an AXIS control and programming interface and an Interrupt ReQuest (IRQ) interface.

Reference numbers 1006A, 1006B and 1006C designate three sets of (e.g., sixty-five) queue handlers for the queue management and QoS functionalities in co-operation with a local memory controller 1007.

As exemplified herein, the local memory controller 1007 can be configured as a multi-port memory controller to access the SRAM/frame buffer in a local memory LMEM (usually this is a distinct element with respect to architecture 1000).

As illustrated in Figure 4, the three sets of queue handlers comprise:
a first set of queue handlers 1006A (#1 to #N) for the MAC controllers 1001;
a second set of queue handlers 1006B (#(N+1) to #(N+M) for the virtual machine (VM) wrappers (#1 to #M) 1003; and
a (single) queue handler 1006C (#(N+M+1)) for the host port 1005.

Reference 1008 in Figure 4 denotes a L2/L2+ forwarding database (static DA tables, dynamic DA hash tables, VLAN ID hash tables, IP address routing tables, ARP table) configured to co-operate with the SW port 1005, e.g., for receiving therefrom configuration and management instructions from the host.

Architecture as illustrated in Figure 4 also comprises functional safety mechanisms (SMs) such as, e.g., a fault collector feature 1009 configured to cooperate with a fault interface Fault Intf (not visible in the figure) and an advanced peripheral bus (APB) debug feature 1010 configured to cooperate with an APB CoreSight^{®} interface (not visible in the figure).

Multiple (4x) functional layer architecture for a gateway/switch/router architecture as exemplified herein can be implemented to include a number of sections (subsystems) .

A first section is an Ethernet/LIN/CAN/VM/Other MAC port layer, e.g., the MAC controllers 1001 and the MAC wrappers 1002.

This section can implement a conventional data link (e.g., Ethernet/CAN/LIN) layer for a specific protocol as well as a proprietary data link interface to transfer status/header/payload for each frame which can be exposed to the next layer (MAC generic frame layer).

Another section is a MAC (generic) frame layer for switch (L2)/routing(L2+) functions (physical/virtual machine/configuration host destinations), e.g., the virtual machine (VM) wrappers 1003.

As exemplified herein, this layer includes two distinct sub-sections, namely:
a MAC translator 1003A to re-map a specific data link interface (Ethernet/LIN/CAN/VM/Other) into a generic frame interface; and
a switch (L2)/router(L2+) function 1003B to deliver the frame to the queue handler (QHND) in the set 1006B of the destination port, according to the forward database (L2/L2+).

Advantageously, the interface between the switch/router 1003B and the QHND is a point-to-point interface, defined as Tx_frame interface and Rx_frame interface.

As exemplified herein, a queue (data, status) handler layer (QHND) per destination port (Ethernet/LIN/CAN/VM, namely 1006B) and configuration host port (namely 1006C), is provided to implement the QoS function.

Each data/status queue is re-mappable based on the frame priority, and is configurable in terms of size, base address, filling/emptying thresholds, for mapping in the memory LMEM.

Filling/emptying/underflow/overflow status can be monitored by asserting interrupts.

As exemplified herein, each QHND layer (e.g., 1006A, 1006B, 1006C) includes two sub-sections (write and read), namely a write QHND and a read QHND.

The write QHND supports concurrent incoming frames received from any Ethernet/LIN/CAN/VM/other MAC port (e.g., at 1001). The Rx_frame interface (point to point) includes flow control, destination port, queue index, data, attributes, frame alignment, frame status, timestamp and safety mechanisms. The frames delivered to a same destination port with a different queue index are concurrently delivered to the next layer (multi-port memory controller).

The read QHND implements the QoS for the outgoing frames to any Ethernet/LIN/CAN/VM/Other MAC port. The scheduler supports different types of algorithms: strict priority, WRR (weighted round robin) according to the related standards.

As exemplified herein, a pre-fetch buffer is implemented on the read data path from the memory LMEM via the controller 1007 to avoid underflow conditions on the Tx side in case of contention/bandwidth limitation on the LMEM memory and/or in cut-through mode; the Tx_frame interface (point to point) includes flow control, data, attributes, frame alignment, frame status, timestamp and safety mechanisms.

As exemplified herein, a multi-port memory controller layer 1007 is provided for bandwidth optimization according to the overall bandwidth required by the source/destination ports. The interface between the local memory controller (LMC) 1007 and the QHND features 1006A, 1006B and 1006Cis a point-to-point interface per destination port and per queue that includes flow control, data, address, access type, safety mechanisms.

As exemplified herein, the virtual machine bridge (VMB) 1004 implements a bridge to transmit/receive L2/L2+ frames to/from a virtual machine mapped at SoC level (not visible in the figure) on a multi-core architecture. The L2/L2+ frames are memory mapped in a system memory (SMEM, not visible in the figures) and the virtual machine bridge 1004 is controlling the control/data flow from/to such a memory via an AXIM interface, to/from the internal switch via data link interface.

A VMB-RX direct memory access (DMA) supports multi-channel (multi frame buffers in system memory linked to multiple DMA descriptors) and/or multi-frames (linked to a single DMA descriptor) for data flow transfer.

A VMB-TX DMA supports multi-channel (multi frame buffers in system memory linked to multiple DMA descriptors) and/or muti-frames (linked to a single DMA descriptor), and dynamic transfer (ingress frame linked to a DMA descriptor depending on the frame attribute, e.g., priority, UDP/TCP port, ...) for data flow transfer.

The virtual machine port (VMP) thus implemented corresponds to a MAC port. Thanks to the frame routers 1003B, frames such as L2/L2+ frames can be delivered from/to any VM/MAC port.

System architecture as exemplified herein lends itself to implementing, for instance, the following data flows:
L2/L2+ frames from/to MAC to/from MAC via internal switch, MAC port;
L2/L2+ frames from/to HOST to/from MAC via AXIS bridge 1005, internal switch, MAC port;
L2/L2+ frames from/to HOST to/from VM via AXIS bridge 1005, internal switch, AXIM write/read DMA 1004A, MAC port.

In system architecture as exemplified herein, the embedded AXIM DMA features 1004A can be shared (depending on the static configuration) over multiple virtual machine ports (VMP) and support the L2/L2+ frames delivery from/to SMEM in streaming mode by N-channels configured by (VMB-RX) or N*D (VMB-TX) descriptors of the DMA to control the Xfer features such as base/start address, burst length, frame max/actual length, number of frames, frame type, etc.

A hierarchical (two-layer) round-robin arbitration scheme can be implemented in the queue handlers 1006B to grant the AXIM on the VM port (first layer with higher priority) and (second layer with lower priority) on the DMA channel.

In system architecture AXIM transactions linked to each VM port are protected by a VMID identifier to grant the access to the memory regions allocated for the VM (isolation function) ports.

In system architecture as exemplified herein, the configuration host port 1005 is configurable via AXIS slave port or embedded DMA, e.g., as AXIS slave port or AXIM master port (via an internal DMA).

A memory map interface is implemented to allow L2/L2+ frames delivery by the host equivalently to any Ethernet/LIN/CAN/VM/Other MAC port.

In case of incoming frames handled as SW frames (e.g., DA=multicast address per control frame), in system architecture as exemplified herein the configuration host can automatically deliver the frame response with DA= multicast address on all the ports that have received the frame with/without bypassing the forwarding database.

A timestamp (TS) optionally captured on the input port of any physical MAC port (e.g., Ethernet) can be delivered via a status queue (internal switch) to the related physical MAC destination port to support in HW w/o SW intervention the PTP end-to-end transparent clock 1-step mode protocol.

In system architecture as exemplified herein:
the L2/L2+ frame transmission on the granted queue according to the QoS configuration can be optionally initiated on threshold level (cut-through mode) in order to minimize the latency of the switch,
an IPv4/IPv6 routing table partitioning x horizontal/vertical memory banks can be advantageously provided to reduce the latency time introduced for the IP address searching,
a flush mechanism of the incoming Rx frames on any Ethernet/LIN/CAN/VM/other MAC port at 1001 is implemented by the write QHND to recover the queue status w/o to cause the unavailability of the switch, with the exception for the lost frames affected by the related fault condition (e.g., CRC, parity errors on the data path, MAC overflow condition).

Advantageously, two policies are available (SW configurable) for the flush mechanism:
back-pressure flow-control (the queue handler is in hold state while the MAC is buffering (FIFO) or flushing);
per queue flow control (the last frame of the full queue is flushed by the queue handler).

In system architecture as exemplified herein, a gateway functionality for LIN/CAN/other protocols (FEATURE on-development) may be provided wherein:
LIN/CAN frames can be optionally encapsulated/decapsulated into/from Ethernet frames or directly forwarded to LIN/CAN physical ports,
LIN/CAN forwarding database includes an address resolution table (LIN/CAN ID to MAC DA address) and port/address forwarding table (TBC/TBD).

System architecture as exemplified herein is statically configurable in respect of parameters such as, e.g., number of MAC ports, number of VM ports, number of AXIM interfaces (DMA), number of queues, number of LMEM ports, and/or L2/L2+ forwarding database size.

Advantageous functional safety (FUSA) features (e.g., 1009, 1010) of system architecture as exemplified herein may include:
watchdog counters (up/down) and/or timers on the control signals (req/ack) of each interface (external: AXIM, AXIS, ..., internal: Rx_frame/Tx_frame interfaces, and so on),
QHND Tx frame counters, Rx frame counters, LMEM pending frame counters x destination port x queue in order to monitor the flow control between the Rx frame and Tx_frame interfaces,
QHND destination port selector (Rx_frame interface) replication in the status queue of the frames transmitted, to validate the correct frame delivery on the actual destination port,
QHND full data/status queues interrupts to monitor the flow control x queue/destination port,
QHND AVB/CBS average bandwidth monitors x queue/transmitting port,
QHND TAS time aware shaper monitors x queue/transmitting port,
end-to-end protection (parity bits) on the data paths from/to source/destination ports,
memory data protection by error correcting code (ECC),
frame erroring (to MAC/VM TX path) to invalidate the egress frame in case of fault conditions.

System architecture as exemplified herein, provides a number of advantages over existing commercial solutions.

These advantages include, for instance:
support of L2+ features for an easy integration in an existing SoC through the (VMB) bridge 1004;
support of safety features (e.g., 1009, 1010) according to ISO262 (ASIL-B) w/o full replication of the main sub-blocks;
flexibility in configuring (static parameterization) the IP sub-system according to system/marketing requirements for the specific use case/application/device;
adequate trade-off between area/power consumption and performances (latency, bandwidth); and
support and integration of gateway functions, not yet consolidated, in co-development, e.g., with car makers (customers) to have an advantage vs. the competition (OEM semiconductors, IP vendors, TBC/TBD).

Examples as discussed herein provide an optimized and safe solution in terms of area, power consumption (clock frequency) and performance or quality of service in terms of latency and bandwidth for a specific automotive networking use case (central switch, domain gateway or any hybrid use).

Examples as discussed herein provide scalability of a networking solution in terms of number of communication ports, protocol types and bandwidth requirements in order to facilitate achieving an adequate trade-off between cost and performance and high reusability for different use cases (devices, applications).

As noted, possible advantageous features of examples as presented herein include the following:
HW network accelerator with packet forwarding at wire speed, providing non-blocking, high performance;
a forwarding database 1008 including static media access control address or MAC DA/masks, static/dynamic (learning) MAC DA Hash table, static virtual local area network identifier or VLAN ID Hash table, static IPv4/IPv6 addresses/masks, address resolution protocol or ARP table;
L2 frames classification and forwarding based on MAC DA, VLAN ID;
L2+ frames classification and forwarding based on MAC DA, IPv4/IPv6 addresses, ARP table;
L2 flow from/to MAC ports, from virtual multi-porting or VMP to MAC ports, from MAC to VMP ports (optional);
L2+ flow from/to VMP ports, from MAC to VMP ports;
input priority re-generation for MAC/VMP port;
minimum latency and reliable throughput requirements by quality of service (QoS): threshold/cut-through mode besides the store & forward one;
QoS based on 8x traffic classes (credit-based shaper - CBS) or strict priority + time aware shaper (TAS) for MAC destination port;
QoS based on 8x traffic classes (strict priority) x VMP destination port;
concurrent frame management by multiple queues mapping in LMEM and/or SMEM x MAC/VM destination port and traffic class;
SW (host) queues mapping in LMEM for local frames + broadcast and multicast frames + PTP, MKA, etc.;
local memory controller (buffer management, interleaving addressing schemes, multiple memory banks);
virtual machine bridge (VMB) including an embedded high-end AXIM DMA (multi-channels, multi-frames and dynamic binding of the descriptors)) for the L2/L3 data flow from/to VMP ports to/from SMEM;
security: MACsec integrity check and MKA (key agreement protocol) protocols (hop2hop protection), configuration via HSM (secure port).

In examples herein, gateway operation involves flexible HW/SW encapsulation/decapsulation of FlexRay/CAN/LIN protocols into/from IEEE 802.3 Ethernet frames and interfaces such as AXIS, AXIM, APB-coresight, SPP-DMA, APB secure port Ethernet 10/100/1000 Mbps PHYs (RMII, RGMII, ...) - MAC embedded - CAN, LIN, FlexRay PHYs.

Safety and debug capabilities include ASIL-x configuration (CRC, lockstep, watchdog), performance monitors and data flow breakpoint.

As discussed, possible advantageous features of examples as presented herein include:
the forwarding database may be configurable to be selectively bypassed, optionally via a software-configurable destination port, for frames coming from host/virtual machine ports,
the virtual machine, VM bridge blocks are configured to implement an interface to support internal virtual machine ports having features selected out of:
virtual machine isolation by virtual machine identifier, VMID attributes, and/or
virtual machine receiver, VMB-RX embedded direct memory access, DMA to support multi-channel operation via multi frame buffers in system memory linked to multiple DMA descriptors and/or multi-frame operation linked to a single DMA descriptor for data flow transfer, and/or
virtual machine transmitter, VMB-TX direct memory access, DMA to support multi-channel operation via multi frame buffers in system memory linked to multiple DMA descriptors and/or multi-frame operation linked to a single DMA descriptor, and dynamic transfer, preferably via ingress frames linked to a DMA descriptor depending on a frame attribute, e.g., priority, UDP/TCP port, ...) for data flow transfer.

In terms of implementation, area/gate/memory size can be based on a static configuration with a core clock frequency targeted at in the range of MHz (depending on FLEX_SGS configurations, MAC/VM ports, connectivity, speed).

Standard compliancy may include:
IEEE 802.3;
IEEE 802.1Qav-2009 (Forwarding and queuing), IEEE 802.1AS-2011 (Time synchronization);
IEEE 802.1Qbv-2015 (Time aware shaper); and
IEEE 802.1AE-2006 (MACsec), IEEE 802.1Xbx-2014 (MKA).

The extent of protection is determined by the annexed claims.

## Claims

1. A system (1000), comprising:
a plurality of media access control, MAC, controllers (1001) configured to provide a MAC port layer controlling exchange of information over a data link,
a plurality of virtual machine, VM, bridge blocks (1004) configured to provide a MAC frame layer interfacing with System-on-Chip, SoC, virtual machines, VMs,
an Ethernet port (1005) configured to receive from a host programming or configuration information for the system (1000),
a local memory controller (1007) configured to facilitate said MAC controllers (1001), said VM bridge blocks and said Ethernet port (1005) in co-operating with a local memory, and
queue handlers (1006A, 1006B and 1006C) configured to provide queue management for said MAC controllers (1001), said VM bridge blocks (1004) and said Ethernet port (1005) during co-operation of said MAC controllers (1001), said VM bridge blocks (1004) and said Ethernet port (1005) with said local memory via the local memory controller (1007),
wherein the virtual machine, VM, bridge blocks (1004) configured to implement an interface to support internal virtual machine ports have the following features:
virtual machine isolation by virtual machine identifier, VMID, attributes, to grant access to the memory regions allocated for the VM ports, and
virtual machine receiver, VMB-RX, embedded direct memory access, DMA, to support multi-channel operation via multi frame buffers in system memory linked to multiple DMA descriptors or multi-frame operation linked to a single DMA descriptor for data flow transfer, and
virtual machine transmitter, VMB-TX, direct memory access, DMA, to support multi-channel operation via multi frame buffers in system memory linked to multiple DMA descriptors or multi-frame operation linked to a single DMA descriptor and dynamic transfer.

2. The system (1000) of claim 1, comprising MAC wrappers (1002) between said MAC controllers (1001) and said queue handlers (1006A), said MAC wrappers (1002) including MAC translator (1002A) and frame router (1002B) features, wherein the MAC translator features (1002A) act between the MAC controllers (1001) and the frame router features (1002B).

3. The system (1000) of claim 1 or claim 2, comprising VM wrappers (1003) between said VM bridge blocks (1004) and said queue handlers (1006B), said VM wrappers (1003) including MAC translator (1003A) and frame router (1003B) features, wherein the MAC translator features (1003A) act between the VM bridge blocks (1004) and the frame router features (1003B).

4. The system (1000) of any of the previous claims, wherein said Ethernet port (1005) is configured to receive programming or configuration information for the system (1000) via an AXIS slave port or embedded DMA.

5. The system (1000) of any of the previous claims, wherein the local memory controller (1007) is a multi-port memory controller configured to access a SRAM/frame buffer in said local memory.

6. The system (1000) of any of the previous claims, wherein said queue handlers comprise:
a first set of queue handlers (1006A) configured to provide queue management for said MAC controllers (1001) during co-operation of said MAC controllers (1001) with said local memory via the local memory controller (1007),
a second set of queue handlers (1006B) configured to provide queue management for said VM bridge blocks (1004) during co-operation of said VM bridge blocks (1004) with said local memory via the local memory controller (1007), and
a third queue handler (1006C) configured to provide queue management for said Ethernet port (1005), during co-operation of said Ethernet port (1005) with said local memory via the local memory controller (1007).

7. The system (1000) of any of the previous claims, comprising a forwarding database (1008) configured to co-operate with said Ethernet port (1005) in receiving configuration and management instructions.

8. The system (1000) of claim 7, wherein the forwarding database (1008) is configured to be selectively bypassed, preferably via a software-configurable destination port, for frames coming from host/virtual machine ports

9. The system (1000) of any of the previous claims, wherein at least some of said queue handlers (1006A, 1006B and 1006C) comprise:
a write subsection supporting concurrent incoming frames received from MAC/VM ports in the system (1000) preferably supporting back-pressure or per queue flow control flush policies, and/or
a read subsection implementing a quality-of-service, QoS priorities for outgoing frames to MAC ports in the system (1000), preferably supporting priority policies including CBS and/or TAS shapers and VM strict priority,
wherein data/status queues are preferably SW configurable in terms of size per destination port.

10. The system (1000) of any of the previous claims, comprising functional safety mechanisms, preferably including a fault collector feature (1009) and a debug feature (1010).

11. The system (1000) of claim 1,
wherein said virtual machine transmitter, VMB-TX direct memory access, DMA to support multi-channel operation includes multi-frame operation linked to a single DMA descriptor, and dynamic transfer via ingress frames linked to a DMA descriptor depending on a frame attribute for data flow transfer.

12. A vehicle equipped with an on-board communication network (100, 102, 104), wherein the network comprises a system (1000) according to any of the previous claims to provide MAC/router/switch/gateway features for said on-board communication network (100, 102, 104).

13. A networking method, comprising:
controlling exchange of information over a data link via a MAC port layer comprising a plurality of media access control, MAC, controllers (1001),
providing a MAC frame layer interfacing with System-on-Chip, SoC, virtual machines, VM, via a plurality of VM bridge blocks (1004)
receiving programming or configuration information via an Ethernet port,
facilitating co-operation with a local memory of said MAC controllers (1001), said VM bridge blocks and said Ethernet port (1005) via a local memory controller (1007), and
providing queue management (1006A, 1006B and 1006C) for said MAC controllers (1001), said VM bridge blocks (1004) and said Ethernet port (1005), during co-operation of said MAC controllers (1001), said VM bridge blocks (1004) and said Ethernet port (1005) with said local memory via said local memory controller,
wherein the virtual machine, VM bridge blocks (1004) are configured to implement an interface to support internal virtual machine ports and have the following features:
virtual machine isolation by virtual machine identifier, VMID, attributes, to grant access to the memory regions allocated for the VM ports, and
virtual machine receiver, VMB-RX, embedded direct memory access, DMA, to support multi-channel operation via multi frame buffers in system memory linked to multiple DMA descriptors or multi-frame operation linked to a single DMA descriptor for data flow transfer, and
virtual machine transmitter, VMB-TX, direct memory access, DMA, to support multi-channel operation via multi frame buffers in system memory linked to multiple DMA descriptors or multi-frame operation linked to a single DMA descriptor and dynamic transfer.

## Patentansprüche

1. System (1000), umfassend:
eine Vielzahl von Media Access Control-, MAC-, Steuereinheiten (1001), die so konfiguriert sind, dass sie eine MAC-Portschicht bereitstellen, die den Austausch von Informationen über eine Datenverbindung steuert,
eine Vielzahl von Virtual Machine-, VM-, Brückenblöcken (1004), die so konfiguriert sind, dass sie eine MAC-Rahmenschicht bereitstellen, die eine Schnittstelle zu System-on-Chip-, SoC-, Virtual Machines, VMs, bildet,
einen Ethernet-Port (1005), der so konfiguriert ist, dass er von einem Host Programmier- oder Konfigurationsinformationen für das System (1000) empfängt, eine lokale Speichersteuereinheit (1007), die so konfiguriert ist, dass sie die MAC-Steuereinheiten (1001), die VM-Brückenblöcke und den Ethernet-Port (1005) beim Zusammenarbeiten mit einem lokalen Speicher begünstigt, und
Warteschlangen-Handler (1006A, 1006B und 1006C), die so konfiguriert sind, dass sie während der Zusammenarbeit der MAC-Steuereinheiten (1001), der VM-Brückenblöcke (1004) und des Ethernet-Ports (1005) mit dem lokalen Speicher über die lokale Speichersteuereinheit (1007) Warteschlangenverwaltung für die MAC-Steuereinheiten (1001), die VM-Brückenblöcke (1004) und den Ethernet-Port (1005) bereitstellen,
wobei die Virtual Machine-, VM-, Brückenblöcke (1004) so konfiguriert sind, dass sie eine Schnittstelle implementieren, um interne Virtual Machine-Ports zu unterstützen, die folgenden Funktionen aufzuweisen:
Isolierung von Virtual Machines durch Virtual Machine Identifier-, VMID-, Attribute, um Zugriff auf die Speicherbereiche zu gewähren, die den VM-Ports zugeordnet sind, und
eingebetteten Virtual Machine Receiver, VMB-RX, Direct Memory Access, DMA, um Mehrkanalbetrieb über Mehrrahmenpuffer in Systemspeicher, der mit mehreren DMA-Deskriptoren verknüpft ist, oder Mehrrahmenbetrieb, der mit einem einzigen DMA-Deskriptor verknüpft ist, für Datenflusstransfer zu unterstützen, und
Virtual Machine Transmitter, VMB-TX, Direct Memory Access, DMA, um Mehrkanalbetrieb über Mehrrahmenpuffer in Systemspeicher, der mit mehreren DMA-Deskriptoren verknüpft ist, oder Mehrrahmenbetrieb, der mit einem einzigen DMA-Deskriptor verknüpft ist, und dynamischen Transfer zu unterstützen.

2. System (1000) nach Anspruch 1, das MAC-Wrapper (1002) zwischen den MAC-Steuereinheiten (1001) und den Warteschlangen-Handlern (1006A) umfasst, wobei die MAC-Wrapper (1002) MAC-Übersetzer- (1002A) und Rahmenrouter- (1002B) Funktionen beinhalten, wobei die MAC-Übersetzer-Funktionen (1002A) zwischen den MAC-Steuereinheiten (1001) und den Rahmenrouter-Funktionen (1002B) agieren.

3. System (1000) nach Anspruch 1 oder Anspruch 2, das VM-Wrapper (1003) zwischen den VM-Brückenblöcken (1004) und den Warteschlangen-Handlern (1006B) umfasst, wobei die VM-Wrapper (1003) MAC-Übersetzer- (1003A) und Rahmenrouter- (1003B) Funktionen beinhalten, wobei die MAC-Übersetzer-Funktionen (1003A) zwischen den VM-Brückenblöcken (1004) und den Rahmenrouter-Funktionen (1003B) agieren.

4. System (1000) nach einem der vorstehenden Ansprüche, wobei der Ethernet-Port (1005) so konfiguriert ist, dass er Programmier- oder Konfigurationsinformationen für das System (1000) über einen AXIS-Slave-Port oder eingebetteten DMA empfängt.

5. System (1000) nach einem der vorstehenden Ansprüche, wobei die lokale Speichersteuereinheit (1007) eine Mehrport-Speichersteuereinheit ist, die so konfiguriert ist, dass sie auf einen SRAM/Rahmenpuffer in dem lokalen Speicher zugreift.

6. System (1000) nach einem der vorstehenden Ansprüche, wobei die Warteschlangen-Handler umfassen:
einen ersten Satz Warteschlangen-Handler (1006A), die so konfiguriert sind, dass sie während der Zusammenarbeit der MAC-Steuereinheiten (1001) mit dem lokalen Speicher über die lokale Speichersteuereinheit (1007) Warteschlangenverwaltung für die MAC-Steuereinheiten (1001) bereitstellen,
einen zweiten Satz Warteschlangen-Handler (1006B), die so konfiguriert sind, dass sie während der Zusammenarbeit der VM-Brückenblöcke (1004) mit dem lokalen Speicher über die lokale Speichersteuereinheit (1007) Warteschlangenverwaltung für die VM-Brückenblöcke (1004) bereitstellen, und
einen dritten Warteschlangen-Handler (1006C), der so konfiguriert ist, dass er während der Zusammenarbeit des Ethernet-Ports (1005) mit dem lokalen Speicher über die lokale Speichersteuereinheit (1007) Warteschlangenverwaltung für den Ethernet-Port (1005) bereitstellt.

7. System (1000) nach einem der vorstehenden Ansprüche, das eine Weiterleitungsdatenbank (1008) umfasst, die so konfiguriert ist, dass sie beim Empfangen von Konfigurations- und Verwaltungsanweisungen mit dem Ethernet-Port (1005) zusammenarbeitet.

8. System (1000) nach Anspruch 7, wobei die Weiterleitungsdatenbank (1008) so konfiguriert ist, dass sie bei Rahmen, die von Host-/Virtual Machine-Ports kommen, selektiv umgangen wird, bevorzugt über einen softwarekonfigurierbaren Zielport.

9. System (1000) nach einem der vorstehenden Ansprüche, wobei mindestens einige der Warteschlangen-Handler (1006A, 1006B und 1006C) umfassen:
einen Schreib-Unterabschnitt, der gleichzeitige ankommende Rahmen unterstützt, die von MAC-/VM-Ports im System (1000) empfangen werden, bevorzugt Back-Pressure oder Flusssteuerungs-Flush-Richtlinien pro Warteschlange unterstützt, und/oder
einen Lese-Unterabschnitt, der Quality-of-Service-, QoS-, Prioritäten für ausgehende Rahmen zu MAC-Ports im System (1000) implementiert, bevorzugt Prioritätsrichtlinien unterstützt, die CBS und/oder TAS-Shaper und strikte VM-Priorität beinhalten,
wobei Daten-/Statuswarteschlangen bevorzugt in Bezug auf Größe pro Zielport SW-konfigurierbar sind.

10. System (1000) nach einem der vorstehenden Ansprüche, das funktionale Sicherheitsmechanismen umfasst, bevorzugt eine Störungssammlerfunktion (1009) und eine Debug-Funktion (1010) beinhaltet.

11. System (1000) nach Anspruch 1,
wobei der Virtual Machine Transmitter, VMB-TX, Direct Memory Access, DMA, um Mehrkanalbetrieb zu unterstützen, Mehrrahmenbetrieb, der mit einem einzigen DMA-Deskriptor verknüpft ist, und dynamischen Transfer über Ingress-Rahmen beinhaltet, der mit einem DMA-Deskriptor verknüpft ist, welcher von einem Rahmenattribut für Datenflusstransfer abhängig ist.

12. Fahrzeug, das mit einem bordeigenen Kommunikationsnetzwerk (100, 102, 104) ausgestattet ist, wobei das Netzwerk ein System (1000) nach einem der vorstehenden Ansprüche umfasst, um MAC-/Router-/Switch/Gateway-Funktionen für das bordeigene Kommunikationsnetzwerk (100, 102, 104) bereitzustellen.

13. Netzwerkverfahren, umfassend:
Steuern von Informationsaustausch über eine Datenverbindung über eine MAC-Portschicht, die eine Vielzahl von Media Access Control-, MAC-, Steuereinheiten (1001) umfasst,
Bereitstellen einer MAC-Rahmenschicht, die eine Schnittstelle zu System-on-Chip-, SoC-, Virtual Machines, VM, über eine Vielzahl von VM-Brückenblöcken (1004) bildet, Empfangen von Programmier- oder Konfigurationsinformationen über einen Ethernet-Port,
Begünstigen der Zusammenarbeit mit einem lokalen Speicher der MAC-Steuereinheiten (1001), der VM-Brückenblöcke und des Ethernet-Ports (1005) über eine lokale Speichersteuereinheit (1007), und
Bereitstellen von Warteschlangenverwaltung (1006A, 1006B und 1006C) für die MAC-Steuereinheiten (1001), die VM-Brückenblöcke (1004) und den Ethernet-Port (1005) während der Zusammenarbeit der MAC-Steuereinheiten (1001), der VM-Brückenblöcke (1004) und des Ethernet-Ports (1005) mit dem lokalen Speicher über die lokale Speichersteuereinheit,
wobei die Virtual Machine-, VM-, Brückenblöcke (1004) so konfiguriert sind, dass sie eine Schnittstelle implementieren, um interne Virtual Machine-Ports zu unterstützen, und die folgenden Funktionen aufweisen:
Isolierung von Virtual Machines durch Virtual Machine Identifier-, VMID-, Attribute, um Zugriff auf die Speicherbereiche zu gewähren, die den VM-Ports zugeordnet sind, und
eingebetteten Virtual Machine Receiver, VMB-RX, Direct Memory Access, DMA, um Mehrkanalbetrieb über Mehrrahmenpuffer in Systemspeicher, der mit mehreren DMA-Deskriptoren verknüpft ist, oder Mehrrahmenbetrieb, der mit einem einzigen DMA-Deskriptor verknüpft ist, für Datenflusstransfer zu unterstützen, und
Virtual Machine Transmitter, VMB-TX, Direct Memory Access, DMA, um Mehrkanalbetrieb über Mehrrahmenpuffer in Systemspeicher, der mit mehreren DMA-Deskriptoren verknüpft ist, oder Mehrrahmenbetrieb, der mit einem einzigen DMA-Deskriptor verknüpft ist, und dynamischen Transfer zu unterstützen.

## Revendications

1. Système (1000) comprenant :
une pluralité de contrôleurs de commande d'accès au support, MAC, (1001) configurés pour fournir une couche de port MAC commandant un échange d'information sur une liaison de données,
une pluralité de blocs de pont de machine virtuelle, VM, (1004) configurés pour fournir un interfaçage de couche de trame MAC avec des machines virtuelles, VM, de système sur puce, SoC,
un port Ethernet (1005) configuré pour recevoir à partir d'un hôte des informations de programmation ou de configuration pour le système (1000),
un contrôleur de mémoire locale (1007) configuré pour assister lesdits contrôleurs MAC (1001), lesdits blocs de pont de VM et ledit port Ethernet (1005) en coopération avec une mémoire locale, et
des gestionnaires de file d'attente (1006A, 1006B et 1006C) configurés pour fournir une gestion de fil d'attente pour lesdits contrôleurs MAC (1001), lesdits blocs de pont de VM (1004) et ledit port Ethernet (1005) durant une coopération desdits contrôleurs MAC (1001), desdits blocs de pont de VM (1004) et dudit port Ethernet (1005) avec ladite mémoire locale via le contrôleur de mémoire locale (1007),
dans lequel les blocs de pont de machine virtuelle, VM, (1004) configurés pour mettre en oeuvre une interface pour prendre en charge des ports de machine virtuelle internes ont les caractéristiques suivantes :
une isolation de machine virtuelle par des attributs d'identifiant de machine virtuelle, VMID, pour autoriser l'accès aux régions de mémoire attribuées pour les ports de VM, et
un accès direct à la mémoire, DMA, intégré au récepteur de machine virtuelle, VBM-RX, pour prendre en charge un fonctionnement multicanaux via des mémoires tampons multi-trames dans une mémoire de système liée à de multiples descripteurs DMA ou un fonctionnement multi-trames lié à un unique descripteur DMA pour un transfert de flux de données, et
un accès direct à la mémoire, DMA, d'émetteur de machine virtuelle, VBM-TX, pour prendre en charge un fonctionnement multicanaux via des mémoires tampons multi-trames dans une mémoire de système liée à de multiples descripteurs DMA ou un fonctionnement multi-trames lié à un unique descripteur DMA et un transfert dynamique.

2. Système (1000) selon la revendication 1, comprenant des enveloppeurs MAC (1002) entre lesdits contrôleurs MAC (1001) et lesdits gestionnaires de file d'attente (1006A), lesdits enveloppeurs MAC (1002) comprenant des fonctions de traducteur MAC (1002A) et de routeur de trame (1002B), dans lequel les fonctions de traducteur MAC (1002A) agissent entre les contrôleurs MAC (1001) et les fonctions de routeur de trame (1002B).

3. Système (1000) selon la revendication 1 ou la revendication 2, comprenant des enveloppeurs VM (1003) entre lesdits blocs de pont de VM (1004) et lesdits gestionnaires de file d'attente (1006B), lesdits enveloppeurs VM (1003) comprenant des fonctions de traducteur MAC (1003A) et de routeur de trame (1003B), dans lequel les fonctions de traducteur MAC (1003A) agissent entre les blocs de pont de VM (1004) et les fonctions de routeur de trame (1003B).

4. Système (1000) selon l'une quelconque des revendications précédentes, dans lequel ledit port Ethernet (1005) est configuré pour recevoir des informations de programmation ou de configuration pour le système (1000) via un port esclave AXIS ou un DMA intégré.

5. Système (1000) selon l'une quelconque des revendications précédentes, dans lequel le contrôleur de mémoire locale (1007) est un contrôleur de mémoire multiports configuré pour accéder à une mémoire tampon de trame/SRAM dans ladite mémoire locale.

6. Système (1000) selon l'une quelconque des revendications précédentes, dans lequel lesdits gestionnaires de file d'attente comprennent :
un premier ensemble de gestionnaires de file d'attente (1006A) configurés pour fournir une gestion de file d'attente pour lesdits contrôleurs MAC (1001) durant une coopération desdits contrôleurs MAC (1001) avec ladite mémoire locale via le contrôleur de mémoire locale (1007), un deuxième ensemble de gestionnaires de file d'attente (1006B) configurés pour fournir une gestion de file d'attente pour lesdits blocs de pont de VM (1004) durant une coopération desdits blocs de pont de VM (1004) avec ladite mémoire locale via le contrôleur de mémoire locale (1007), et
un troisième gestionnaire de file d'attente (1006C) configuré pour fournir une gestion de file d'attente pour ledit port Ethernet (1005) durant une coopération dudit port Ethernet (1005) avec ladite mémoire locale via le contrôleur de mémoire locale (1007).

7. Système (1000) selon l'une quelconque des revendications précédentes, comprenant une base de données d'envoi (1008) configurée pour coopérer avec ledit port Ethernet (1005) dans la réception d'instructions de configuration et de gestion.

8. Système (1000) selon la revendication 7, dans lequel la base de données d'envoi (1008) est configurée pour être contournée de manière sélective, de préférence via un port de destination configurable par logiciel, pour des trames provenant de ports de machine virtuelle/hôte.

9. Système (1000) selon l'une quelconque des revendications précédentes, dans lequel au moins certains desdits gestionnaires de file d'attente (1006A, 1006B et 1006C) comprennent :
une sous-section d'écriture prenant en charge des trames entrantes simultanées reçues à partir de ports MAC/VM dans le système (1000), de préférence prenant en charge des politiques de purge de commande de flux par file d'attente ou de contre-pression, et/ou
une sous-section de lecture mettant en oeuvre des priorités de qualité de service, QoS, pour des trames sortantes vers des ports MAC dans le système (1000), de préférence prenant en charge des politiques de priorité comprenant des enveloppeurs CBS et/ou TAS et une priorité stricte de VM, dans lequel des files d'attente de données/états sont de préférence configurables par logiciel en termes de taille par port de destination.

10. Système (1000) selon l'une quelconque des revendications précédentes, comprenant des mécanismes de sécurité fonctionnelle, de préférence comprenant une fonction de collecteur de défauts (1009) et une fonction de débogage (1010).

11. Système (1000) selon la revendication 1,
dans lequel ledit accès direct à la mémoire, DMA, d'émetteur de machine virtuelle, VBM-TX, pour prendre en charge un fonctionnement multicanaux comprend un fonctionnement multi-trames lié à un unique descripteur DMA, et un transfert dynamique via des trames d'entrée liées à un descripteur DMA en fonction d'un attribut de trame pour transfert de flux de données.

12. Véhicule équipé d'un réseau de communication embarqué (100, 102, 104), dans lequel le réseau comprend un système (1000) selon l'une quelconque des revendications précédentes pour fournir des fonctions MAC/routeur/commutateur/passerelle pour ledit réseau de communication embarqué (100, 102, 104).

13. Procédé de réseautage comprenant :
la commande d'un échange d'informations sur une liaison de données via une couche de port MAC comprenant une pluralité de contrôleurs de commande d'accès au support, MAC, (1001), la fourniture d'un interfaçage de couche de trame MAC avec des machines virtuelles, VM, de système sur puce, SoC, via une pluralité de blocs de pont de VM (1004),
la réception d'informations de programmation ou de configuration via un port Ethernet,
l'assistance d'une coopération avec une mémoire locale desdits contrôleurs MAC (1001), desdits blocs de pont de VM (1004) et dudit port Ethernet (1005) via un contrôleur de mémoire locale (1007), et
la fourniture de gestionnaires de file d'attente (1006A, 1006B et 1006C) pour lesdits contrôleurs MAC (1001), lesdits blocs de pont de VM (1004) et ledit port Ethernet (1005), durant une coopération desdits contrôleurs MAC (1001), desdits blocs de pont de VM (1004) et dudit port Ethernet (1005) avec ladite mémoire locale via ledit contrôleur de mémoire locale,
dans lequel les blocs de pont de machine virtuelle, VM, (1004) sont configurés pour mettre en oeuvre une interface pour prendre en charge des ports de machine virtuelle internes et ont les caractéristiques suivantes :
une isolation de machine virtuelle par des attributs d'identifiant de machine virtuelle, VMID, pour autoriser l'accès aux régions de mémoire attribuées pour les ports de VM, et
un accès direct à la mémoire, DMA, intégré au récepteur de machine virtuelle, VBM-RX, pour prendre en charge un fonctionnement multicanaux via des mémoires tampons multi-trames dans une mémoire de système liée à de multiples descripteurs DMA ou un fonctionnement multi-trames lié à un unique descripteur DMA pour un transfert de flux de données, et
un accès direct à la mémoire, DMA, d'émetteur de machine virtuelle, VBM-TX, pour prendre en charge un fonctionnement multicanaux via des mémoires tampons multi-trames dans une mémoire de système liée à de multiples descripteurs DMA ou un fonctionnement multi-trames lié à un unique descripteur DMA et un transfert dynamique.
